# EUROPEAN PATENT SPECIFICATION

(11) **EP 1 311 389 B1**
(45) Date of publication and mention of the grant of the patent: **11.01.2006**
(21) Application number: 01967233.6
(22) Date of filing: 02.08.2001
(51) Int. Cl.: B32B 27/08, C08J 5/18

(54) **CONFORMABLE SHEET**
FORMBARES BLATT
FEUILLE APTE A PRENDRE DES FORMES

(30) Priority: 05.08.2000 GB 0019166
(43) Date of publication of application: 21.05.2003
(73) Proprietor: UCB, S.A., 1070 Bruxelles (BE)
(72) Inventor: MCEWEN, Alasdair UCB Films PLC, Cumbria CA7 9BG (GB); JOHNSTONE, Jillian UCB Films PLC, Cumbria CA7 9BG (GB)
(74) Representative: Brand, Thomas Louis
(86) International application number: PCT/EP2001/008985
(87) International publication number: WO 2002/011983

(56) References cited:
- EP-A- 0 235 930
- EP-A- 0 763 422

## Description

The present invention relates to improvements in sheet-like materials, for example polymeric films.

Sheet-like materials (which include films) are often used in applications where they are applied to uneven, rough or curved surfaces, and/or to surfaces which have protrusions, for example screws or rivets. There is a desire for improved sheets which are less stiff and conform more easily to different shapes than do present sheets. There is therefore a desire to develop improved sheets which can be more readily applied to conformable and concave surfaces, for example with fewer or substantially no unsightly wrinkles or creases in the applied sheets. It is also desirable for such sheets to have a reduced tendency to tear, rip or break around surface protrusions. Such sheets would have particular utility as labels and/or in display and/or graphic art applications where often the sheets used are large (e.g. for point of sale displays, outdoor display applications, signage etc.).

The present invention provides sheets which address some or all of these problems and are particularly suited for use in the aforementioned applications.

Certain prior art polymeric films will now be described:
WO 97/20888 (Montell) describes polyolefin compositions and blown films obtained therefrom, the compositions being obtained by mixing: (A) a heterogeneous polyolefin composition itself comprising a fraction (A1) which is insoluble in xylene and a fraction (A2) which is soluble in xylene; (B) a polyolefin composition comprising a low density ethylene copolymer (B1) and a propylene copolymer (B2) of relatively high insolubility in xylene; and, optionally, (C) a branched propylene polymer.
WO 97/20889 (Montell) describes polyolefin compositions and blown films obtained therefrom, the compositions comprising: A) a heterogeneous polyolefin composition itself comprising a fraction (A1) which is insoluble in xylene at room temperature and a fraction (A2) which is soluble in xylene at room temperature; and B) a branched propylene polymer. The said compositions are particularly processable when used in the process for the preparation of blown films.
WO 97/49744 (Montell) describes elastomeric compositions with high flexibility and transparency which consist of (a) 10% to 20% of a propylene homopolymer or copolymer of 95% propylene with ethylene and/or CH₂=CHR olefin, (b) 5% to 20% of a copolymer insoluble in xylene at room temperature comprising propylene and ethylene, and (c) 60% to 80% of a copolymer soluble in xylene at room temperature which consists of propylene and 15 to 25% w/w ethylene and/or ethylene / CH₂=CHR mix.
WO 98/37144 (Montell) describes soft elastomeric thermoplastic polyolefin compositions consisting of (I) an heterophasic olefin polymer composition consisting of a crystalline propylene homopolymer or copolymer fraction and an elastomeric ethylene copolymer fraction and (II) an elastomeric polymer having a hardness equal to or less than 90 points and selected from the group consisting of copolymers of ethylene, ethylene/methyl acrylate copolymers, saturated or unsaturated styrene block copolymers and unsaturated norbornene polymers.
EP 235930 (3M) relates to single layer, cast films used as tapes for PSA. The films have Secant modulus values in both MD & TD of < 3,700 kg/cm² (= 362 MPa to 3sf).
EP 0444671-A (Himont Inc.) describes films and laminates which are prepared by known filming or calendering processes using heterophasic propylene polymer compositions comprising: A) 10-60 parts by weight of homopolymer polypropylene having an isotactic index greater than 90, or crystalline copolymer of propylene with ethylene and/or other alpha-olefins containing more than 85% by weight of propylene and having an isotactic index greater than 85; B) 10-40 parts by weight of a copolymer containing prevailingly ethylene, which is insoluble in xylene at room temperature; C) 30-60 parts by weight of an amorphous ethylene-propylene copolymer, soluble in xylene at room temperature and containing 40-70% by weight of ethylene; said propylene polymer compositions having a ratio between the intrinsic viscosities, in tetrahydronaphthalene at 135°C, of the portion soluble in xylene and of the portion insoluble in xylene at room temperature of from 0.8 to 1.2.
EP 0477662-A (Himont Inc.) describes films or sheets comprising an olefin polymer composition which comprises (a) from about 10 to 50 parts of a propylene homopolymer having an isotactic index greater than 80, or a copolymer of propylene with ethylene and/or an another alpha-olefin, containing over 80% propylene and having an isotactic index greater than 80; (b) from about 5 to 20 parts of a semi-crystalline copolymer fraction, which copolymer is insoluble in xylene at room or ambient temperature; and c) from about 40 to 80 parts of a copolymer fraction of ethylene with propylene and/or another alpha-olefin, and optionally with minor amounts of a diene, said copolymer fraction containing less than 40% ethylene and/or other alpha-olefin, being soluble in xylene at room temperature, and having an intrinsic viscosity from 1.5 to 4 dl/g. Coextruded films or sheets and laminates wherein at least one layer is a film or sheet as described above, and films or sheets of blends of the olefin polymer composition and another olefin polymer are also disclosed.
EP 0659551-A (Himont Inc.) describes composite polyolefin films suitable for packaging comprising: A) a single or multilayer bioriented film, wherein the single layer or at least one layer of said bioriented film is propylene crystalline homopolymer; and B) a single- or multilayer cast film, wherein the single layer or at least one layer of said cast film is a layer of a composition comprising: I) propylene crystalline homopolymer, or a crystalline copolymer of propylene with ethylene and/or a C₄₋₈alpha-olefin; II) a copolymer fraction containing propylene and ethylene, insoluble in xylene at ambient temperature; III) a copolymer of ethylene with propylene and/or a C₄₋₈alpha-olefin and soluble in xylene at ambient temperature.
EP 0763422 (Grace ) describes oriented multi-layer heat shrinkable polypropylene (PP) films of high strength and low modulus. The problem of improved conformability is not addressed. The core layer of the films described is a PP homo, co or terpolymer of low tensile modulus (=< 60, 000 PSI = 414 MPa (3sf))..
EP 0814127-A (Montell) describes an embrittlement resistant polymer composition having a heat distortion temperature >= 60°C consisting of (a) 80% w/w of a propylene homopolymer of isotacticity >90% or a random copolymer of propylene and either ethylene or C₄₋₁₀alpha-olefins, and (b) a flexibility enhancing amount (but non clarity adversely effecting amount) of an elastomeric copolymer of ethylene and either propylene or butene-1. Optional ingredients include at least one hindered amine stabiliser, acid neutraliser, sorbitol based clarifier compound and/or any suitable mixtures thereof.
EP 0814128-A (Montell) describes an embrittlement resistant polymer composition including ingredients to improve radiation resistance which consist of (a) a visbroken polymer composition consisting of a crystalline random copolymer of propylene and either ethylene or C₄₋₁₀alpha-olefins, and (b) polymethyl propyl 3-oxy-4-(2,2,6,6-tetramethyl)piperidinyl siloxane. Optional ingredients include acid neutralisers, sorbitol-based clarifier compounds, and/or any suitable mixtures thereof.
US 5,677,044 (Montell) describes multilayer heat-shrinkable films in which at least one layer (A) is based on a polyolefin composition comprising a propylene copolymer and having particular crystallinity characteristics, and at least one layer (B) comprises a linear copolymer of ethylene with one or more alpha-olefins (LLDPE).
US 6,010,772 (Montell) describes stretchable multilayer films in which at least one layer (A) thereof comprises a copolymer (I) of ethylene with one or more alpha -olefins CH₂=CHR, having a density of between 0.88 and 0.945 g/cm3, a melt index of from 0.1 to 10 g/10' and containing up to 20 mol % of alpha-olefin CH₂=CHR (LLDPE), and at least one layer (B) comprises a heterophasic polyolefin composition having: (a) 20-100 parts by weight of a fraction which is insoluble in xylene at room temperature, comprising a propylene homopolymer or a copolymer of propylene with ethylene and/or another alpha-olefin CH₂=CHR¹, this fraction containing more than 85% by weight of units derived from propylene; and (b) 30-80 parts by weight of a fraction which is soluble in xylene at room temperature, comprising an amorphous copolymer of ethylene with propylene and/or another alpha -olefin CH₂=CHR¹, this fraction optionally containing smaller proportions of a diene and containing more than 15% by weight of units derived from ethylene.

These prior art documents do not describe or appreciate the particular problems with prior art films as those described herein. It is an object of the invention to provide films with improved properties and preferably particularly suitable for the uses described herein.

Therefore broadly in accordance with the present invention there is provided a substantially planar sheet as defined in indepedent claim 1.

Preferably sheets of the present invention have a thickness of 50µm or more.

In another aspect of the present invention there is provided a label of optionally improved conformability, the label comprising a first backing sheet coated with a release layer on top of which is attached a second sheet of the present invention as described herein, the second sheet optionally being provided with a printable coating on the side opposed to the first (backing) sheet.

The backing sheet may be formed from any suitable material well known in the art.

The elasticity modulus as described herein denotes the 1 % Secant modulus measured by any well known standard method such as any of those described in BS 2782, ASTM D882 and/or DIN 53455.

As used herein "tensile strength" is measured by any well known standard method such as any of those described in BS 2782, ASTM D882 and/or DIN 53455.

Preferably the sheet has a tensile strength of about 88% or less, more preferably about 85% or less, for example from 86% to 88% compared to a control sheet without the second material in the layer.

Preferably the sheet has a proportionate reduction in percentage elongation of 85% or less, more preferably from about 75% to about 85%, for example from 78% to 84%, of the percentage value compared to a control sheet without the second material in the layer.

Preferably the sheet has an elasticity modulus of about 88% or less, more preferably from about 71% to about 78% (MD) and/or from about 65% to about 71% (TD) compared to a control sheet without the second material in the layer.

Preferably the sheet has an flexural stiffness of about 96% or less, more preferably from about 73% to about 84% (MD) and/or from about 86% to about 96% (TD) compared to a control sheet without the second material in the layer.

Preferably the sheet is substantially self supporting, i.e. does not need to be applied to a substrate for mechanical support although it is capable of being so applied.

Preferably the two-component layer described above as a feature of the present invention will impart and/or enhance conformability of the sheet compared with a similar sheet with only the first polymeric material. For convenience this two-component layer may be also referred to herein as a "conformability layer".

Preferably the sheet is obtainable by a process in which the sheet is stretched from an initial size to a final size in at least one direction parallel to its surface. More preferably the sheet is bi-axially oriented, most preferably in two substantially orthogonal directions for example by stretching.

Conventionally the longitudinal direction (LD), parallel to the longest axis of a sheet, is the direction in which a sheet web passes through a production machine, and thus is also known as the machine direction (MD). For example, a sheet web may be stretched in the forward web direction (i.e. MD). Conventionally the transverse direction (TD) is normal to the LD and parallel to the sheet surface. The sheet web may also be stretched sideways (i.e. "TD") by a suitable process such as the well known bubble and/or stenter processes Preferred sheets are those oriented in both MD and TD and such orientation may be simultaneous and/or sequential. The terms MD and TD may also denote the direction on the sheet in which (optionally anisotropic) properties are measured to give values as specified herein.

Preferably the sheet exhibits at least one (optionally all) of the following properties measured in any direction parallel to the sheet surface (optionally MD and/or TD):
(a) a tensile strength from about 100 to about 250 Nm⁻²;
(b) an elasticity modulus from about 2100 to about 3100 MPa;
(c) a percentage elongation below about 150%; and
(d) a percentage shrinkage below about 7%.

In yet another aspect of the present invention there is provided use of a composition comprising a first material and a second material characterised in that the second material exhibits a lower elasticity modulus than the first material (optionally the first and second materials are selected from those described herein) to prepare a sheet having the properties described herein and/or a conformable label as described herein.

As used herein "percentage elongation" is the increase in a linear dimension of the sheet measured after manufacture and resulting from the manufacturing and orientation process.

As used herein "percentage shrinkage" is defined as the percentage decrease in a linear dimension of a sheet after manufacture which results from its being heated to 130°C for one minute.

More preferably sheets of the invention exhibit one or more of the following properties measured in the machine direction (MD):
(a1) a tensile strength of from about 130 to about 250 Nm⁻²;
(b1) an elasticity modulus < about 3000 MPa;
(c1) a percentage elongation < about 90%;
(d1) a percentage shrinkage < about 7% measured in the transverse direction (TD);
(a2) a tensile strength of from about 110 to about 200 Nm⁻²;
(b2) an elasticity modulus from about 2600 to about 2800 MPa;
(c2) a percentage elongation < about 120%; and/or
(d2) a percentage shrinkage < about 3.0%.

More conveniently sheets of the invention exhibit one or more (optionally all) of the following properties:
(a1) a MD tensile strength of from about 110 to about 250 Nm⁻²;
(b1) an MD elasticity modulus =< about 3000 MPa;
(c1) a MD percentage elongation =< about 120%;
(d1) a TD percentage shrinkage =< about 7%.

Most conveniently sheets of the invention exhibit one or more (optionally all) of the following properties:
(a2) a MD tensile strength of from about 130 to about 200 Nm⁻²;
(b2) an MD elasticity modulus from about 2600 to about 2800 MPa;
(c2) a MD percentage elongation =< about 90%; and/or
(d2) a TD percentage shrinkage =< about 3.0%.

Advantageously sheets of the present invention have at least one, more advantageously at least two, most advantageously at least four (for example all) of the following properties:
a MD tensile strength of from 140 to 218 Nm⁻², for example from 144 to 170 Nm⁻²;
a TD tensile strength of from 110 to 171 Nm⁻², for example from 111 to 148 Nm⁻²;
an MD elasticity modulus of from 1620 to 2000 Nm⁻², for example from 1694 to 1964 Nm⁻²;
an TD elasticity modulus of from 1050 to 1890 Nm⁻², for example from 1230 to 1882 Nm⁻²;
an MD elongation at break of from 55 to 80 Nm⁻², for example from 65 to 78 Nm⁻²;
an TD elongation at break of from 100 to 120 Nm⁻², for example from 107 to 119 Nm⁻²;
an MD percentage shrinkage of from 5.0 to 12.0 %, for example from 5.1 to 7.2 %; and/or
an TD percentage shrinkage of at least 1.7, for example from 1.7 to 3.2 %.

Preferably the first material forms the bulk and/or the continuous phase of the sheet, and more preferably the first material comprises a polymer.

Preferably the second material is homogeneously located with the first material, and more preferably is dispersed (such as in an emulsion) and/or dissolved (such as in a solid solution) therein. Most preferably the second material comprises a polymer.

The second material is present in the or each conformability layers in an amount from about 5% to about 30%, and more preferably from about 10% to about 20%, by weight of the first material in said layer.

The elasticity modulus of the first material is from about 2000 to about 3000 MPa (TD or MD, preferably MD).

The elasticity modulus of the second material is from about 1000 to about 2500 MPa (TD or MD, preferably MD).

Sheets of the present invention may be formed from any suitable, well known sheeting materials (optionally as the first material) and/or may use such sheeting materials as supporting substrates (for example if a sheet of the present invention is not self supporting). Suitable sheeting materials include any of the following: polymer films (especially polyolefinic films), paper, synthetic paper, woven fabrics, non-woven fabrics, ceramic sheets metallic fiber sheets, metallized sheets or films, metallic foils, metallic plates and/or multilayer composite sheets formed by any suitable combinations and/or mixtures of said materials. For sheets intended for use as labels, polyolefin films are preferred, especially the oriented polypropylene films described in EP0202812-A

The first material is a homopolymer and/or a polymer of randomly oriented amorphous non-crystalline polymer chains. Most preferably the first material is selected from polyolefins (e.g. polypropylene and/or polyethylene), polyurethanes, polyvinylhalides (e.g. PVC), polyesters (e.g. polyethylene terephthalate - PET), polyamides (e.g. nylons), and/or other non-hydrocarbon polymers. In particular the first material can be a polyolefin, for example polypropylene.

After extrusion of a polypropylene film by conventional extrusion techniques, the film may be heated and molecularly oriented by stretching in for example the MD and/or TD. Orientation of the film may be achieved by any suitable technique, for example by the well known bubble and/or stenter processes. The film thus formed comprises biaxially oriented polypropylene (also known herein as BOPP). Therefore a particularly preferred type of first polymeric material is a molecularly oriented, isotactic polypropylene homopolymer, especially BOPP.

The second polymeric material is one or more elastomers, polyolefins and/or mixtures thereof; more preferably a thermoplastic polyolefin optionally with a hardness value above about 90 points, conveniently in an amount of from about 5% to about 25% w/w of the total polymer composition.

Preferably the second polymer is selected from at least one of the group consisting of: homopolymers and copolymers containing one or more repeat units derived from any ethylenic polymer precursors; copolymers containing one or more repeat units derived from any propylenic polymer precursors, copolymers containing one or more repeat units derived from any styrenic polymer precursors (more preferably selected from: styrene butadiene copolymers (SBS); styrene-isoprene-styrene block copolymers (SIS), styrene-ethylene-butylene-styrene block copolymers (SEBS) and/or saturated styrenic block copolymers); copolymers containing one or more repeat units derived from any CH₂=CHR (R denotes any saturated C₁₋₂₀ hydrocarbon group, preferably C₁₋₁₀ alkyl) olefinic polymer precursors, and/or copolymers containing one or more repeat units derived from any norbomenic polymer precursors.

Conveniently the second polymeric material comprises a thermoplastic polyolefin polymer (such as that available from Montell under the designation Adflex X500F) and/or a SEBS, SBS and/or saturated styrenic block copolymer (such as those available commercially from Asahi Chemicals under the trademark Tufteo®, e.g. Tuftec® L515).

The film can be a single layer containing a major proportion of polypropylene, for example an isotactic propylene homopolymer, but it can also be a coextruded multilayer film where the polymer of at least one layer is an isotactic propylene homopolymer, the polymer of one or both outer layers being a polymer having better conformability than the isotactic propylene homopolymer. Such surface layer polymers may be, for example, a copolymer of propylene with a minor amount of one or more other α-olefins, such as ethylene and/or butylene-1.

The sheets of the present invention can consist of only one layer, i.e. the conformability layer described herein. However, it is preferred that the sheets are multilayered, i.e. consist of a plurality of layers. The layers can be combined by lamination or co-extrusion. More preferably the sheets consist of at least three layers where the or each conformability layer is sandwiched between other layers such that none of the conformability layers forms either outer surface of the sheets.

Thus, for example, a film of the invention can have three layers with the polymer of a central or core layer being formed from the second polymeric material. The core layer may have a thickness of about 90 to about 98% of the total thickness of the film. The remainder of such three layer films can then have two outer layers of the first polymeric material, with each outer layer having substantially identical thicknesses.

Other films of the present invention consist of five coextruded layers with a central core layer, two layers contiguous to the central core layer and two outermost layers, where the central core layer and such contiguous layers include the second polymeric material and the two outer layers are formed from the first polymeric material. Preferably the central core layer has a thickness from about 70% to about 96%, more preferably from about 76% to about 90%, of the total thickness of the film. Preferably each of such contiguous layers has substantially the same thickness, which is more preferably from about 1% to about 6%, and most preferably from about 1% to about 2%, of the total thickness of the film. Preferably each outer layer has substantially the same thickness, which is more preferably from about 1% to about 6%, and most preferably from about 1% to about 2%, of the total thickness of the film.

Films of the invention can also be made by the laminating of two coextruded films.

One or more layers of films of the present invention can be opaque or transparent, depending on the end use of the film. Such layers can also include voids introduced by stretch orienting a layer containing particles (preferably substantially spherical particles) of a material which is higher melting than and immiscible with the layer material (e.g. if the layer is formed from isotactic polypropylene homopolymer, such particles can be of polybutylene terephthalate, as described, for example, in US 4632869 and US 4720716).

Sheets of the present invention usually have one or more of the following preferred properties: an MD elasticity modulus of from about 1600 to about 2600 MPa; a TD elasticity modulus of from about 1200 to about 2200 MPa; a % elongation after manufacture of from about 60% to about 85% (MD) and/or of from about 110% to about 115% (TD); a % shrinkage after manufacture of from about 5% to about 7% (MD) and/or of from about -1 to about 2.5 % (TD) after the sheet has been heated to 130°C for one minute.

In an optional embodiment of the present invention the sheet has a mean thickness above about 75µm, more preferably from about 50µm to about 150µm.

Preferred sheets of the present invention include one or more free radical scavengers and/or UV attenuating materials optionally located in the conformability layer. More preferred sheets include UV attenuating materials in an amount such that the sheets retain at least 50% of their mechanical properties after exposure to artificial weathering (Dry Cycle 0.35W\m² C340nm BST 63°) for at least about 1500 hours, preferably at least about 2000 hours, more preferably at least about 2500 hours (which equates to an outdoor lifetime of approximately 2 years). Most preferably the sheet include UV attenuating materials in an amount from about 0.1 % to about 0.5 % by weight of the first material.

UV attenuating materials will be understood to be any materials which acts to reduce and/or block the effect of incident UV radiation on the film by any suitable chemical and/or physical effects, such as by reflection, absorption, refraction, scattering and/or otherwise. Examples of suitable UV attenuating materials include any of the following and mixtures thereof: benzophenones; bentriazoles; and hindered amine stabilisers, for example that available from Ciba under the trade name Tinuvin 783. The UV attenuating material can also be added to the film as a coating in which case it is preferably present in an amount in the coating composition of from about 0.1% to 20%, more preferably 1% to about 10% w/w.

Solar radiation includes UV radiation with wavelengths up to about 400 nm; UV-A has a wavelength from about 315 nm to about 400 nm; UV-B has a wavelength from about 290 nm to about 315 nm; and UV-C has a wavelength of up about 290 nm. Preferred UV attenuating materials are those particularly effective against UV-B as this usually causes the most damage to polymeric materials such as films of the present invention.

It will be understood by those skilled in the art that conformable sheets of the present invention can include further additives and/or may be coated by any suitable means to provide additional desired end properties to the sheet.

Before coating a sheet of the present invention it may, if desired, be subjected to a chemical or physical surface-modifying treatment to improve adhesion of the coating to the sheet, thereby reducing the possibility of the coating peeling or being stripped from the sheet. Known prior art techniques for surface pre-treatment prior to coating include, for example, film chlorination, i.e. exposure of the film to gaseous chlorine; treatment with oxidising agents, for example chromic acid, hot air or steam treatment; flame treatment and the like. A preferred treatment, because of its simplicity and effectiveness, is the so-called electronic treatment in which the sheet is passed between a pair of spaced electrodes to expose a surface of the sheet to a high voltage electrical stress accompanied by corona discharge.

If even adhesion of the coating is desired, it is preferred to apply an intermediate continuous coating of primer material to a surface of the sheet which has first been treated by any of the above methods. Primer materials which can be used include titanates and poly-(ethylene imine), and they can be applied as conventional solution coatings, for example poly-(ethylene imine) can be applied as either an aqueous or organic solvent solution, e.g. in ethanol comprising about 0.5 wt. % of the imine.

One or more of the layers of sheets of the invention (such as films) can contain additives and/or coatings conventionally employed in the manufacture of sheets, and such additives and/or coatings can be added for more than one effect. Such additives and/or coatings can be selected from one or more of the following, mixtures thereof and/or combinations thereof: dyes; pigments, colorants; metallised and/or pseudo-metallised coatings; lubricants, anti-static agents (cationic, anionic and/or non-ionic, e.g. poly-(oxyethylene) sorbitan monooleate), anti-oxidants, surface-active agents, stiffening aids, slip aids (for example hot slips aids or cold slip aids which improve the ability of a film to slide satisfactorily across surfaces at about room temperature, e.g. micro-crystalline wax; gloss improvers, prodegradants, barrier coatings to alter the gas and/or moisture permeability properties of the film (such as polyvinylidene halides, e.g. PVdC); anti-blocking aids (for example microcrystalline wax, e.g. with an average particle size from about 0.1 to about 0.6µm); tack reducing additives (e.g. fumed silica); particulate materials (e.g. talc); additives to reduce coefficient of friction (COF) (e.g. terpolymers of about 2 to 15 wt.% of acrylic or methacrylic acid, 10 to 80 wt. % of methyl or ethyl acrylate, and 10 to 80 wt. % of methyl methyacrylate, together with colloidal silica and carnauba wax, as described in US 3753769); sealability additives; additives to improve ink adhesion and/or printability, cross-linking agents (e.g. melamine formaldehyde resin); adhesive layers (e.g. a pressure sensitive adhesive); and/or an adhesive release layers (e.g. for use as a liner in peel plate label applications).

Some or all of the additives listed above may be added together as a composition to coat the sheet of the present Invention and/or form a new layer which may itself be coated (i.e. form the central core layer of a final sheet) and/or may form the outer or surface layer of the sheet. Altematively some or all of the preceding additives may be added separately and/or incorporated directly Into the bulk of the sheet, optionally during and/or prior to sheet formation (e.g. as part of the original polymer composition), and thus they may or may not form layers or coatings as such.

A coating composition may be applied to a treated surface of a sheet (e.g. a polymer film) in any suitable manner, for example by gravure coating, roll coating, dipping, spraying, etc. Excess liquid (e.g. aqueous solution) can be removed by squeeze rolls, doctor knives, etc. The coating composition will ordinarily be applied in such an amount that following drying there will have been deposited, a smooth, evenly distributed layer of from about 0.02 to about 0.10 micron thickness. In general, the thickness of the applied coating should be sufficient to impart the desired characteristics to the substrate sheet. Once applied to the sheet, a coating may be subsequently dried by hot air, radiant heat or by any other suitable means to provide a conformable sheet of the present invention having other desired properties (e.g. a non-water soluble, optionally clear, adherent, glossy coated film useful, for example, in labelling and/or graphic arts applications).

The sheets may be made by any suitable process known to those skilled in the art, for example by extrusion, lamination and/or co-extrusion processes and if desired they may be oriented, e.g. by bubble and/or stenter process(es).

In a further aspect of the present invention there is provided a label, security marking and/or display device formed from a sheet of the present invention.

Another aspect of the present invention provides for use of a sheet of the present invention in a method of manufacture of a label, tag or other display device, preferably suitable for use in the fields of labelling, graphic arts, security and/or displays.

A still further aspect of the present invention provides for the use of sheets of the present invention in methods of labelling, graphic arts, security and/or displays.

A yet still further aspect of the present invention provides for use of a first and/or second polymeric material as defined herein for the purpose of enhancing in a sheet as defined herein (the sheet optional exhibiting improved conformability) one or more of properties as defined herein. Preferably those properties measured In any direction parallel to the sheet surface (optionally MD and/or TD) are selected from one or more (optionally all) of.
(a) tensile strength preferably from about 100 to about 250 Nm⁻²;
(b) elasticity modulus preferably from about 2100 to about 3100 MPa;
(c) percentage elongation preferably below about 150%; and/or
(d) percentage shrinkage preferably below about 7%.

Optionally the properties may be further selected to have one or more of those values given herein.

Further aspects and/or features of the present invention are given in the claims.

The invention is further illustrated by reference to the following Examples, which are by way of illustration only and are not limiting to the scope of the invention described herein. In the Examples, a five layered laminated BOPP film is prepared by a bubble process as follows.

### Bubble process

A film is formed by the coextrusion of three compositions through a triple channel annular die. A polypropylene composition (denoted as Composition A) from the middle channel of the die forms the core layer of the bubble, the composition in the outermost channel of the die forms the exterior surface of the bubble (denoted as composition B), and the composition from the inner channel forms the interior surface of the bubble (denoted as composition C).

As the three compositions are coextruded, air is blown through the die to form a tubular bubble which is cooled by passage over a mandrel within the tube, and it is externally quenched by passage through a water bath surrounding the mandrel. The tube is then heated to stretching temperature, expanded by internal gas pressure to form the bubble, and withdrawn from an expansion zone at a rate greater than that at which it is fed thereto, so that the bubble is stretched to seven times its original dimensions in both the direction of extrusion (MD) and in a direction transverse thereto (TD). The stretched tubular film is then collapsed whilst being heated, thereby forming a flat laminated film which is subsequently heat-set at a temperature of 120°C. on a matt-surfaced roller heat-setter (e.g. of the kind described in G81124886-A).

The resultant five layered film consists of two three layered films laminated together by layers of Composition C on the interior of the bubble to form a core layer surrounded by two identical layers of Composition A and two identical outer layers of composition B which form the two outer surfaces of the film. Thus the films formed by this method have a B/A/C/A/B layered structure, the film strictly speaking being a six layer film since the inner core layer formed from Composition C is formed by laminating two such layers together.

In the following examples, the outer layer of Composition B which forms the outer surface of the film has a mean thickness of from about 0.3 to about 0.6 µm; and the central laminating core layer of composition C has a mean thickness of about 1 µm.

### Comparative Example (Comp I)

A comparative BOPP film was prepared by the bubble process as described above, where Composition A was a stabilised propylene homopolymer suitable for film production with a melt flow index (MFI) measured at 230°C and 2.16 kg of about 6.5 to about 9.0; Composition B was a propylene (95% w/w)/ethylene (5% w/w) copolymer; and Composition C was a propylene (82% w/w)/ethylene (1% w/w)/butylene-1 (17% w/w) terpolymer of low crystallinity.

It will be appreciated that other Examples (not necessarily tested herein) could be carried out by replacing any of Compositions A to C by other suitable compositions. For example Composition A could be replaced by a polymer of polypropylene containing a small concentration (from about 0.5% to about 1.0% w/w) of polyethylene, and/or Composition B could be replaced by a propylene (92% w/w)/ethylene (4% w/w)/butylene-1 (4% w/w) terpolymer.

### Examples 1 to 5

Films of the invention were prepared as described in Comparative Example I, except that amounts (% by weight of the polypropylene) of the thermoplastic polyolefin (available commercially from Montell under the trade name Adflex X500F) shown in Table 1 were added to the propylene homopolymer forming composition A. Stable BOPP bubbles were achieved with Adflex X500F concentrations from 5 to 25 % w/w. At each stage the bubble was allowed to settle and samples were taken.

The films were tested, and the results obtained are given in the following Tables 1 and 2, as follows:

**Table 1**

| Example | Amount Adflex X500F/wt% | Tensile strength / Nm⁻² | | Elasticity Modulus / MPa | | Elongation / % | | Shrinkage / % | |
|---|---|---|---|---|---|---|---|---|---|
| | | MD | TD | MD | TD | MD | TD | MD | TD |
| Comp I | - | 228.4 | 187.4 | 2695 | 2397 | 86.40 | 122.6 | 7.6 | 1.5 |
| 1 | 5 | 168.9 | 147.4 | 2032 | 1882 | 78.16 | 107.4 | 5.1 | 1.7 |
| 2 | 10 | 163.4 | 141.9 | 1964 | 1486 | 75.51 | 108.7 | 6.6 | 2.1 |
| 3 | 15 | 168.0 | 136.1 | 1854 | 1670 | 70.84 | 108.9 | 5.9 | 2.3 |
| 4 | 20 | 146.9 | 115.4 | 1694 | 1391 | 70.11 | 109.4 | 6.9 | 2.5 |
| 5 | 25 | 144.8 | 111.8 | 1627 | 1230 | 65.07 | 119.0 | 7.2 | 3.2 |

**Table 2**

| Example | Gloss / % | Haze / % | Clarity / % | Yield / kgm⁻² | Av. thickness / µm |
|---|---|---|---|---|---|
| Comp I | 94.7 | 98.2 | 2.94 | 18.90 | 56.2 |
| 1 | 94.3 | 97.5 | 2.29 | 19.06 | 57.6 |
| 2 | 94.1 | 97.4 | 2.45 | 18.75 | 56.7 |
| 3 | 92.9 | 97.2 | 2.85 | 18.59 | 57.8 |
| 4 | 86.1 | 96.6 | 3.86 | 17.63 | 61.8 |
| 5 | 74.6 | 97.5 | 5.24 | 17.86 | 60.6 |

The test method used for gloss was ASTM D2457-70 and for haze and clarity were ASTM D1003 and D1044.

The addition of Adflex X500F to a conventional film (Comp I) was successfully at 5%, 10%, 15%, 20% and 25% w/w, and no delamination was observed for any of these films.

The optical properties of the modified films were within acceptable limits, although there was a slight reduction in clarity and gloss at Adflex levels from 15% to 25 %. At concentrations of Adflex of from 20% to 25 % there was a slight reduction in thermal stability and an increase in TD shrinkage was observed. Increasing levels of Adflex reduced the elasticity modulus (MD), elongation (MD) and tensile strength (MD and TD) leading to a more conformable film.

### Examples 6 to 9

Films of the invention were prepared as described above except that the Adflex X500F was replaced as the modifying resin by various amounts of another resin, such as the saturated styrenic block copolymer (that available commercially from Asahi Chemicals under the trademark Tuftec® L515) as shown In Table 3.

**Table 3**

| Example | Amount of Tuftec L515 / wt% |
|---|---|
| 6 | 2 |
| 7 | 8 |
| 8 | 10 |
| 9 | 20 |
| 10 | 10 (another resin)¹ |

| | |
|---|---|
| 1 The modifying resin used was EMAC 2260 not Tuftec L515. | |

A comparative prior art OPP film Comp II (UCB code ref. C50) was prepared analogous to Comp I herein and also without any modifying resin. Some of these films were tested as described above and the results are given in Tables 4 &5 below.

**Table 4**

| Example | Flexural stiffness : Mn / m² | | Tensile strength : Nm⁻² | | Elasticity Modulus: Mn/m² | | Elongation at break | | Shrinkage: % | |
|---|---|---|---|---|---|---|---|---|---|---|
| | MD | TD | MD | TD | MD | TD | MD | TD | MD | TD |
| Comp II | 2.147 | 1.956 | 219.9 | 193.3 | 2504 | 2348 | 85.34. | 107.6 | 4.84 | -0.26 |
| 8 | 1.549 | 1.88 | 214.2 | 170.2 | 1936 | 1539 | 66.82 | 114.9 | 11.18 | 2.81 |
| 9 | 0.9283 | 1.315 | 218.1 | 129.5 | 1644 | 1054 | 58.12 | 109 | 8.7 | -1.8 |
| 10 | 1.802 | 1.683 | 221.2 | 167.6 | 1789 | 1656 | 71.5 | 104.1 | 10.65 | 2.28 |

**Table 5 (optical properties of film measured on a surface treated with a corona discharge)**

| Example | Gloss / % | WAH / % | NAH/ % |
|---|---|---|---|
| Comp II | 92.7 | 1.6 | 5 to 10 |
| 8 | 87.4 | 1.8 | 2 to 3 |
| 9 | 86.9 | 2.6 | 2 |
| 10 | 85.0 | 2.7 | 13 to 14 |

## Claims

1. A substantially planar sheet having two opposable surfaces and which has been stretched in a machine direction and in a transverse direction from an initial size to a final size; the sheet comprising at least one conformability layer comprising
as a bulk and/or continuous phase a first polymeric material comprising a homopolyolefin and/or a polyolefin of randomly oriented amorphous non-crystalline polymer chains, the first material having a 1% Secant modulus from 2000 to 3000 MPa and homogeneously dispersed or dissolved therein a second polymeric material comprising a elastomer and/or polyolefin, the second material having a 1% Secant modulus from 1000 to 2500 MPa and lower than that of the first material; in an amount from 5% to 30% by weight of the first material;
where incorporation of the second material produces a sheet having a tensile strength and/or elasticity modulus of about 90% or less of that of a sheet without such material measured in any direction parallel to the sheet surface and where the sheet measured in the machine direction has a 1% Secant modulus of from 1600 to 2600 MPa; and where the sheet measured in the transverse direction has a 1% Secant modulus from 1800 to 2200 MPa.

2. A sheet according to claim 1, which exhibits one or more of the following properties:
measured in the machine direction:
(a) a percentage elongation to break after manufacture below about 90%;
(b) a percentage shrinkage after manufacture of below about 7% when the sheet is heated to 130°C for one minute;
measured in the transverse direction:
(c) a percentage elongation to break after manufacture of below about 120%; and/or
(d) a percentage shrinkage after manufacture of below about 3.0% when the sheet is heated to 130°C for one minute.

3. A sheet according to claim 1 or claim 2, in which the polyolefin of the first material comprises biaxially oriented polypropylene.

4. A sheet according to any preceding claim, in which the second polymeric material comprises at least one polymer selected from at least one of the group consisting of homopolymers and copolymers including one or more repeat units derived from any ethylenic polymer precursor; copolymers including one or more repeat units derived from any propylenic polymer precursor; copolymers including one or more repeat units derived from any styrenic polymer precursor; copolymers including one or more repeat units derived from any CH₂=CHR whereby R denotes any saturated C₁₋₂₀ hydrocarbon group, preferably C₁₋₁₀alkyl, olefinic polymer precursor and/or copolymers including one or more repeat units derived from any nonbomenic polymer precursor.

5. A sheet according to any preceding claim in which the second polymeric material is present in the or each conformable layer(s) in amount of from 5 to 30% by weight of the first polymeric material.

6. A sheet according to any preceding claim comprising a plurality of layers.

7. A sheet according to claim 6, comprising at least three layers where the or each conformable layer is sandwiched between other layers such that none of the or each conformable layers forms either surface of the sheet.

8. A sheet according to any preceding claim, having an percentage elongation during manufacture of from 60% to 85% measured in the machine direction.

9. A sheet according to any preceding claim, having a percentage shrinkage after manufacture and heating at 130°C for one minute of from 5% to 7% measured in the machine direction.

10. A sheet according to any preceding claim, having a percentage elongation after manufacture of from 110% to 115% measured in the transverse direction.

11. A sheet according to any preceding claim, having a percentage shrinkage after manufacture and heating to 130°C for one minute of from zero to 2.5% measured in the transverse direction.

12. A sheet according to any preceding claim, having a mean thickness above about 75µm.

13. A sheet according to any preceding claim, including a free radical scavenger and/or a UV attenuating material optionally located in the conformable layer, preferably in an amount of from 0.1% to 0.5% by weight of the first material, such that the sheet retains at least 50% of its mechanical properties after exposure to artificial weathering for 2500 hours.

14. A label device, security device, marking device, graphic art device and/or display device comprising a sheet according to any preceding claim.

15. A label comprising a first backing sheet coated with a release layer on top of which is attached a second sheet according to any of claims 1 to 13 the second sheet being provided with a printable coating on the side opposed to the first (backing) sheet.

16. A method of making of a label device, a security device, a marking device and/or display device using a sheet according to any of claims 1 to 13.

17. Using a sheet according to any of claims 1 to 13 in a method of labeling, security marking and/or display.

## Revendications

1. Feuille substantiellement plane ayant deux surfaces opposables et qui a été étirée dans un sens machine et dans un sens transversal d'une taille initiale à une taille finale ; la feuille comprenant au moins une couche de conformabilité comprenant
comme phase de masse et/ou continue une première matière polymérique comprenant une homopolyoléfine et/ou une polyoléfine aux chaînes polymères non cristallines amorphes orientées de façon aléatoire, la première matière ayant un module sécant à 1% de 2000 à 3000 MPa et dans laquelle est dispersée ou dissoute de façon homogène une deuxième matière polymérique comprenant un élastomère et/ou une polyoléfine, la deuxième matière ayant un module sécant à 1% de 1000 à 2500 MPa et inférieur à celui de la première matière ; dans une quantité de 5% à 30% en poids de la première matière ;
où l'incorporation de la deuxième matière produit une feuille ayant une résistance à la traction et/ou un module d'élasticité d'environ 90% ou moins de celui d'une feuille sans cette matière mesuré dans n'importe quel sens parallèle à la surface de la feuille et où la feuille mesurée dans le sens machine a un module sécant à 1% de 1600 à 2600 MPa ; et où la feuille mesurée dans le sens transversal a un module sécant à 1% de 1800 à 2200 MPa.

2. Feuille selon la revendication 1, qui présente une ou plusieurs des propriétés suivantes :
mesurées dans le sens machine :
(a) un pourcentage d'allongement à la rupture après fabrication inférieur à environ 90% ;
(b) un pourcentage de rétrécissement après fabrication inférieur à environ 7% quand la feuille est chauffée à 130°C pendant une minute ;
mesurées dans le sens transversal :
(a) un pourcentage d'allongement à la rupture après fabrication inférieur à environ 120% ; et/ou
(b) un pourcentage de rétrécissement après fabrication inférieur à environ 3,0% quand la feuille est chauffée à 130°C pendant une minute.

3. Feuille selon la revendication 1 ou la revendication 2, dans laquelle la polyoléfine de la première matière comprend un polypropylène bi-orienté.

4. Feuille selon l'une quelconque des revendications précédentes, dans laquelle la deuxième matière polymérique comprend au moins un polymère sélectionné parmi au moins l'un du groupe consistant en homopolymères et copolymères comportant une ou plusieurs unités de répétition dérivées de n'importe quel précurseur de polymère éthylénique ; copolymères comportant une ou plusieurs unités de répétition dérivées de n'importe quel précurseur de polymère propylénique ; copolymères comportant une ou plusieurs unités de répétition dérivées de n'importe quel précurseur de polymère styrénique ; copolymères comportant une ou plusieurs unités de répétition dérivées de n'importe quel précurseur de polymère oléfinique CH₂=CHR où R désigne n'importe quel groupe d'hydrate de carbone saturé C₁₋₂₀, de préférence un alkyl C₁₋₁₀, et/ou copolymères comportant une ou plusieurs unités de répétition dérivées de n'importe quel précurseur de polymère norborénique.

5. Feuille selon l'une quelconque des revendications précédentes, dans laquelle la deuxième matière polymère est présente dans la ou chaque couche conformable dans une quantité de 5 à 30% en poids de la première matière polymérique.

6. Feuille selon l'une quelconque des revendications précédentes comprenant une pluralité de couches.

7. Feuille selon la revendication 6, comprenant au moins trois couches où la ou chaque couche conformable est prise en sandwich entre d'autres couches de telle sorte qu'aucune de la ou chaque couche conformable ne forme l'une ou l'autre surface de la feuille.

8. Feuille selon l'une quelconque des revendications précédentes, ayant un pourcentage d'allongement durant la fabrication de 60% à 85% mesuré dans le sens machine.

9. Feuille selon l'une quelconque des revendications précédentes, ayant un pourcentage de rétrécissement après fabrication et chauffage à 130°C pendant une minute de 5% à 7% mesuré dans le sens machine.

10. Feuille selon l'une quelconque des revendications précédentes, ayant un pourcentage d'allongement après fabrication de 110% à 115% mesuré dans le sens transversal.

11. Feuille selon l'une quelconque des revendications précédentes, ayant un pourcentage de rétrécissement après fabrication et chauffage à 130°C pendant une minute de zéro à 2,5% mesuré dans le sens transversal.

12. Feuille selon l'une quelconque des revendications précédentes, ayant une épaisseur moyenne supérieure à environ 75µm.

13. Feuille selon l'une quelconque des revendications précédentes, comportant un suppresseur de radicaux libres et/ou une matière d'atténuation des UV situé facultativement dans la couche conformable, de préférence dans une quantité d'environ 0,1% à 0,5% en poids de la première matière, de telle sorte que la feuille conserve au moins 50% de ses propriétés mécaniques après exposition à un vieillissement aux intempéries artificiel pendant 2500 heures.

14. Dispositif d'étiquette, dispositif de sécurité, dispositif de marquage, dispositif d'art graphique et/ou dispositif d'affichage comprenant une feuille selon l'une quelconque des revendications précédentes.

15. Etiquette comprenant une première feuille de doublage revêtue d'une couche de décollage par-dessus laquelle est fixée une deuxième feuille selon l'une quelconque des revendications 1 à 13, la deuxième feuille étant munie d'un revêtement imprimable sur le côté opposé à la première feuille (de doublage).

16. Procédé de réalisation d'un dispositif d'étiquette, dispositif de sécurité, dispositif de marquage et/ou dispositif d'affichage en utilisant une feuille selon l'une quelconque des revendications 1 à 13.

17. Utilisation d'une feuille selon l'une quelconque des revendications 1 à 13 dans un procédé d'étiquetage, de marquage de sécurité et/ou d'affichage.

## Patentansprüche

1. Im Wesentlichen planare Folie mit zwei gegenüberlegbaren Flächen, die in einer Maschinenrichtung und in einer Querrichtung von einer Anfangsgröße auf eine Endgröße gedehnt wurde, wobei die Folie wenigstens eine Anpassungsschicht aufweist, die Folgendes umfasst:
als Massen- und/oder kontinuierliche Phase ein erstes polymeres Material, das ein Homopolyolefin und/oder ein Polyolefin mit zufällig orientierten amorphen nichtkristallinen Polymerketten aufweist, wobei das erste Material ein 1% Secant-Modul von 2000 bis 3000 MPa hat und homogen darin dispergiert oder aufgelöst ein zweites polymeres Material, das ein Elastomer und/oder Polyolefin umfasst, in einer Menge von 5 bis 30 Gew.-% des ersten Materials aufweist, wobei das zweite Material ein 1% Secant-Modul von 1000 bis 2500 MPa hat, das geringer als das des ersten Materials ist;
wobei der Einbau des zweiten Materials eine Folie mit einer Zugfestigkeit und/oder einem Elastizitätsmodul von etwa 90% oder weniger von der/dem einer Folie ohne ein solches Material ergibt, gemessen in einer Richtung parallel zur Folienoberfläche, und wobei die Folie in der Maschinenrichtung gemessen ein 1% Secant-Modul von 1600 bis 2600 MPa hat; und wobei die Folie in der Querrichtung gemessen ein 1% Secant-Modul von 1800 bis 2200 MPa hat.

2. Folie nach Anspruch 1, die eine oder mehrere der folgenden Eigenschaften aufweist:
in der Maschinenrichtung gemessen:
(a) eine prozentuale Bruchdehnung nach der Herstellung unter etwa 90%;
(b) eine prozentuale Schrumpfung nach der Herstellung unter etwa 7%, wenn die Folie eine Minute lang auf 130°C erhitzt wird;
in der Querrichtung gemessen:
(c) eine prozentuale Bruchdehnung nach der Herstellung unter etwa 120%; und/oder
(d) eine prozentuale Schrumpfung nach der Herstellung unter etwa 3,0%, wenn die Folie eine Minute lang auf 130°C erhitzt wird.

3. Folie nach Anspruch 1 oder Anspruch 2, bei der das Polyolefin des ersten Materials biaxial ausgerichtetes Polypropylen umfasst.

4. Folie nach einem der vorherigen Ansprüche, bei der das zweite polymere Material wenigstens ein Polymer aufweist, das ausgewählt wurde aus wenigstens einer der Gruppe bestehend aus Homopolymeren und Copolymeren mit einer oder mehreren Repetiereinheiten, die von einem Ethylenpolymervorläufer stammen; Copolymeren mit einer oder mehreren Repetiereinheiten, die von einem Propylenpolymervorläufer stammen; Copolymeren mit einer oder mehreren Repetiereinheiten, die von einem Styrolpolymervorläufer stammen; Copolymeren mit einer oder mehreren Repetiereinheiten, die von einem CH₂=CHR Olefinpolymervorläufer stammen, wobei R eine gesättigte C₁₋₂₀ Kohlenwasserstoffgruppe, vorzugsweise C₁₋₁₀ Alkyl bedeutet, und/oder Copolymeren mit einer oder mehreren Repetiereinheiten, die von einem Norbomenpolymervorläufer stammen.

5. Folie nach einem der vorherigen Ansprüche, bei der das zweite polymere Material in der oder jeder anpassungsfähigen Schicht in einer Menge von 5 bis 30 Gew.-% des ersten polymeren Materials vorliegt.

6. Folie nach einem der vorherigen Ansprüche, die eine Mehrzahl von Schichten umfasst.

7. Folie nach Anspruch 6, die wenigstens drei Schichten umfasst, wobei die oder oder jede anpassungsfähige Schicht zwischen anderen Schichten eingeschlossen ist, so dass keine der anpassungsfähigen Schichten eine Oberfläche der Folie bildet.

8. Folie nach einem der vorherigen Ansprüche mit einer in Maschinenrichtung gemessenen prozentualen Bruchdehnung bei der Herstellung von 60% bis 85%.

9. Folie nach einem der vorherigen Ansprüche mit einer in Maschinenrichtung gemessenen prozentualen Schrumpfung von 5 bis 7% nach der Herstellung und einem einminütigen Erhitzen bei 130°C.

10. Folie nach einem der vorherigen Ansprüche mit einer in der Querrichtung gemessenen prozentualen Bruchdehnung nach der Herstellung von 110 bis 115%.

11. Folie nach einem der vorherigen Ansprüche mit einer in der Querrichtung gemessenen prozentualen Schrumpfung von 0 bis 2,5% nach der Herstellung und einem einminütigen Erhitzen auf 130°C.

12. Folie nach einem der vorherigen Ansprüche mit einer mittleren Stärke von mehr als etwa 75 µm.

13. Folie nach einem der vorherigen Ansprüche mit einem Freie-Radikale-Fänger und/oder einem UV-Dämpfungsmaterial, der/das bei Bedarf in der anpassungsfähigen Schicht vorzugsweise in einer Menge von 0,1 bis 0,5 Gew.-% des ersten Materials vorliegt, so dass die Folie wenigstens 50% ihrer mechanischen Eigenschaften nach einem 2500stündigen Kontakt mit künstlichen Witterungsbedingungen beibehält.

14. Etikettiervorrichtung, Sicherheitsvorrichtung, Markierungsvorrichtung, Grafikvorrichtung und/oder Anzeigevorrichtung, die eine Folie nach einem der vorherigen Ansprüche umfasst.

15. Etikett, das eine erste Grundfolie umfasst, die mit einer Trennschicht überzogen ist, auf der eine zweite Folie nach einem der Ansprüche 1 bis 13 befestigt ist, wobei die zweite Folie mit einem bedruckbaren Überzug auf der Seite versehen ist, die der ersten (Grund-) Folie gegenüberliegt.

16. Verfahren zur Herstellung einer Etikettiervorrichtung, Sicherheitsvorrichtung, Markierungsvorrichtung und/oder Anzeigevorrichtung nach einem der Ansprüche 1 bis 13.

17. Verwendung einer Folie nach einem der Ansprüche 1 bis 13 bei einem Verfahren zum Etikettieren, Sicherheitsmarkieren und/oder Anzeigen.
